# EUROPÄISCHE PATENTSCHRIFT

(11) **EP 2 904 222 B1**
(45) Veröffentlichungstag und Bekanntmachung des Hinweises auf die Patenterteilung: **26.10.2016**
(21) Anmeldenummer: 13745572.1
(22) Anmeldetag: 10.07.2013
(51) Int. Cl.: F01L 1/18

(54) **HEBELARTIGER NOCKENFOLGER**
LEVER-STYLE CAM FOLLOWER
GALET DE CAME DE TYPE LEVIER

(30) Priorität: 02.10.2012 DE 102012217984; 25.10.2012 DE 102012219506
(43) Veröffentlichungstag der Anmeldung: 12.08.2015
(73) Patentinhaber: Schaeffler Technologies AG & Co. KG, 91074 Herzogenaurach (DE)
(72) Erfinder: DUPKE, Stefan, 95361 Ködnitz (DE)
(86) Internationale Anmeldenummer: PCT/DE2013/200041
(87) Internationale Veröffentlichungsnummer: WO 2014/053124

(56) Entgegenhaltungen:
- EP-A2- 1 318 278
- DE-A1- 19 631 653
- GB-A- 2 179 700
- JP-A- 2008 115 818
- US-A- 5 921 209

## Beschreibung

Die Erfindung betrifft einen hebelartigen Nockenfolger, insbesondere für einen Schiebenockenventiltrieb einer Brennkraftmaschine, mit einer Nockenanlaufrolle, einer Anlage für ein Gaswechselventil und einer Lagerstelle zur Abstützung gegenüber einem Zylinderkopf der Brennkraftmaschine, welcher Nockenfolger zwei durch einen Querbalken verbundene Seitenwände hat, zwischen denen die auf einem Bolzen gelagerte Nockenanlaufrolle aufgenommen ist, welcher Bolzen in Bohrungen der Seitenwände verläuft.

Ein gattungsgemäßer Nockenfolger ist in Figur 3 der DE 10 2004 002 290 A1 offenbart. Wie zu erkennen ist, hat der Nockenfolger, welcher hier als Schlepphebel vorliegt, auf der Seite des Durchlaufs des deaktivierten Nockens eine verringerte Seitenwandhöhe. Das Dokument WO92/10650A1 offenbart einen weiteren Nockenfolger.

Maßgeblich für einen zu erzielenden maximalen Differenzhub der Nocken ist der Abstand zwischen der Oberseite der Nockenanlaufrolle und der nockenzugewandten Längsseite der Seitenwand beim deaktivierten Nocken (2-er - oder 3-er Nockenpaket). Eine Vergrößerung des Radius der Rolle käme infrage, um einen größeren Differenzhub zu ermöglichen. Dies würde jedoch zwangsläufig zu einer Vergrößerung der i. d. R. notwendigen Rollentasche im Querbalken mit der Folge von Steifigkeitsverlusten und einer Erhöhung der Nockenfolgermasse führen.

Wie des Weiteren aus der o. g. Zitierung zu entnehmen ist, liegen die Bohrungen zur Aufnahme des Bolzens zur Lagerung der Nockenanlaufrolle vergleichsweise nahe an den nockenzugewandten Längsseiten der Seitenwände. Ein Reststeg an Seitenwandmaterial oberhalb der jeweiligen Bohrung ist hier notwendig, um bspw. die Nadeln der Nadellagerung für die Nockenanlaufrolle an einem axialen Herausfallen zu hindern und um einen sauberen, rissfreien Verstemmvorgang zu ermöglichen.

Es ist Aufgabe der Erfindung, bei dem vorgenannten Nockenfolger einen vergrößerten Nockendifferenzhub ohne wesentlichen Steifigkeitsverlust und ohne Masseerhöhung zu ermöglichen.

Erfindungsgemäß wird diese Aufgabe dadurch gelöst, dass jede Bohrung für den Bolzen eine nockenzugewandte Längsseite ihrer Seitenwand abschnittsweise schneidet, derartig, dass der Bolzen an dieser Längsseite mit einem Umfangssegment frei liegt.

Der Bolzen ist somit im Bereich seiner weitestgehend lastfreien Zone nicht von Bohrungsmaterial umfasst. Die jeweilige Seitenwand wird praktisch soweit bei gleichbleibendem Abstand der Bohrung zur nockenabgewandten Längsseite in ihrer Höhe verringert, dass die Bohrung abschnittsweise in die obere Längswand tritt. Hierdurch wird ein vergrößerter Differenzhub für das Nockenpaar / die Nockengruppe ermöglicht. Anders gesagt kann auch bei gleichbleibendem Differenzhub die Nockenanlaufrolle in ihrem Durchmesser verringert werden, was Masse spart und den Bauraum reduziert.

Mit vom Schutzumfang einbezogen ist auch eine Lösung, bei welcher nur eine der Bolzenbohrungen teilweise geöffnet dargestellt ist und zwar diejenige auf der Hebelseite, auf welcher der nicht aktive Nocken / die nicht aktive Nockengruppe "eintaucht" und somit hier Bauraumbedarf herrscht.

Zwar bezieht sich der Einsatz des Nockenfolgers, welcher als Schlepp- , Kippo. Schwinghebel vorliegen kann, bevorzugt auf einen variablen Schiebenockenventiltrieb. Denkbar und vorgesehen ist jedoch auch eine Verwendung in einem Standardventiltrieb. Ferner kommt eine Applikation auch als Nocken- oder Exzenterfolger in einer Pumpe oder einem Verdichter infrage.

Gemäß einer vorteilhaften Fortbildung der Erfindung umfasst die jeweilige Bohrung den Bolzen um mehr als 180°, so dass dieser nach erfolgter Montage nicht aus dem freien Umfangssegment treten kann. Denkbar ist jedoch auch eine U-förmige Bohrungstasche an jeder Seitenwand mit parallelen Schenkeln. Hier bietet sich eine Befestigung des Bolzens bspw. über eine Sprengring-NutVerbindung, einen Schweißpunkt, eine Verstemmung oder durch Einpressen an. Alternativ kann der Bolzen von den Bohrungen auch weniger als 180° umschlossen sein, so dass die Schenkel aufgespreizt vorliegen. Der Bolzen würde bei dieser Variante letztlich "lose" in den Bohrungen während des Betriebes der Brennkraftmaschine liegen und müsste lediglich für einen Transport / ein Handling am Herausfallen bis zur Endmontage gehindert werden. Er kann allerdings auch für den Betrieb hierbei eine Lagesicherung erhalten.

In Konkretisierung der Erfindung soll der Bolzen durch biegeelastische Ansätze gehalten werden, welche aus dem diesen über 180° umschließenden Seitenwandmaterial bestehen. Der Bolzen wird bei Montage somit einfach unter Aufweitung der Ansätze in die Bohrungen geschnappt. Eine anderweitige Montagemöglichkeit des Bolzens bietet sich durch seitliches Durchstecken in an sich bekannter Art und Weise bei anschließendem stirnseitigen Verstemmen an. Hierbei müssen die Ansätze nicht aufgebogen werden.

Zweckmäßig ist es, wenn der Bolzen komplett längs durchgehärtet ist (Kernhärte mind. 58HRC), wobei dieser dann im harten Zustand die vorgenannte Verstemmung bspw., jedoch nicht ausschließlich, über Radialpunktnieten erfährt. Das Durchhärten erfordert nur einen vergleichsweise geringen Aufwand für die Wärmebehandlung. Der Bolzen kann hierbei als Massenartikel aus der Wälzlagerproduktion vorliegen.

Weitere Unteransprüche betreffen zweckmäßige Lagerungsmöglichkeiten der Nockenanlaufrolle auf dem Bolzen. Hier ist in erster Linie an eine Wälzlagerung wie eine Nadellagerung gedacht. Es kommen jedoch auch eine Gleitlagerung oder eine Gleit-Wälzlagerung infrage.

So ist es in Fortbildung der Erfindung vorgesehen, die Nockenanlaufrolle direkt auf dem Bolzen gleitzulagern. Hierbei wird der Fachmann geeignete seitliche Schmiermitteleintritte und einen vergrößerten Bolzendurchmesser innerhalb der Seitenwände des Nockenfolgers realisieren.

Alternativ kann auf die Wälzlagerung verzichtet werden und stattdessen wird ein Zwischenring appliziert, der neben einem Stahlwerkstoff auch aus einem Kunststoff oder einer Maschinenbaukeramik bestehen kann. Ggf. kann auch der Zwischenring mit einer Nadellagerung an dessen Außenlaufbahn oder Bohrung kombiniert werden.

Vorgeschlagen ist es zudem, dass der Bolzen beidendig eine Abstufung seines Durchmessers aufweist, über welche er in den Bohrungen gelagert ist, wobei Ringabsätze der Abstufungen vor Innenseiten der Seitenwände, den Bolzen axial fixierend, laufen. Der mittig somit erhöhte Bereich kann ein- oder mehrteilig an den Bolzen angebunden sein. Bei letztgenannter Lösung kann der Bolzen einen aufgepressten Ring aufweisen, dessen Stirnen die Ringabsätze bilden. Diese Lösung stellt sich als vergleichsweise preiswert dar.

Aufgrund des o. g. verringerten Bolzendurchmessers in dessen Endbereichen können, bei gleichbleibendem Abstand der Bohrungen zur Unterseite des Nockenfolgers, die nockenzugewandten Längsseiten der Seitenwände noch niedriger ausgelegt werden. Somit ist ein noch größerer Nockendifferenzhub unter Umständen möglich oder es ist bei gleichem Differenzhub möglich, die Nockenanlaufrolle im Durchmesser zu reduzieren.

Die Erfindung sieht auch ein Baukastenprinzip vor, d. h., bei gleich "dickem" Bolzen können, je nach Applikation, aufgepresste Ringe mit unterschiedlichen Außendurchmessern vorgesehen werden (Nadel- oder Gleitlagerung), um somit bspw. bei vergrößertem Ring die hertzsche Pressung zu reduzieren oder bessere Gleitlagerbedingungen zu schaffen.

Gemäß einer weiteren Konkretisierung der Erfindung soll der Nockenfolger ein U-Profil im Querschnitt aufweisen und aus Blech stanz-biegetechnisch hergestellt sein. Es ist jedoch auch ein umgekehrtes U-Profil oder eine H-Form denkbar und vorgesehen. Zudem kann der Nockenfolger auch aus mehreren Komponenten gebaut sein.

Neben der Blechausbildung kann der Nockenfolger auch in einem Fließpress- oder Spanverfahren bzw. durch Gießen oder in einem MIM-Verfahren dargestellt werden.

Zur Zeichnung:
- Figur 1 zeigt eine erste Variante eines als Schlepphebel ausgebildeten Nockenfolgers mit nadelgelagerter Nockenanlaufrolle in räumlicher Darstellung;
- Figur 2 zeigt einen Nockenfolger ähnlich dem Vorgenannten, jedoch mit direkt auf dem Bolzen laufender Nockenanlaufrolle und in die Bohrungen geschnapptem Bolzen und
- Figur 3 zeigt einen Nockenfolger wie zuvor, jedoch mit Zwischenring zur Lagerung der Nockenanlaufrolle; hier in Seitenansicht.

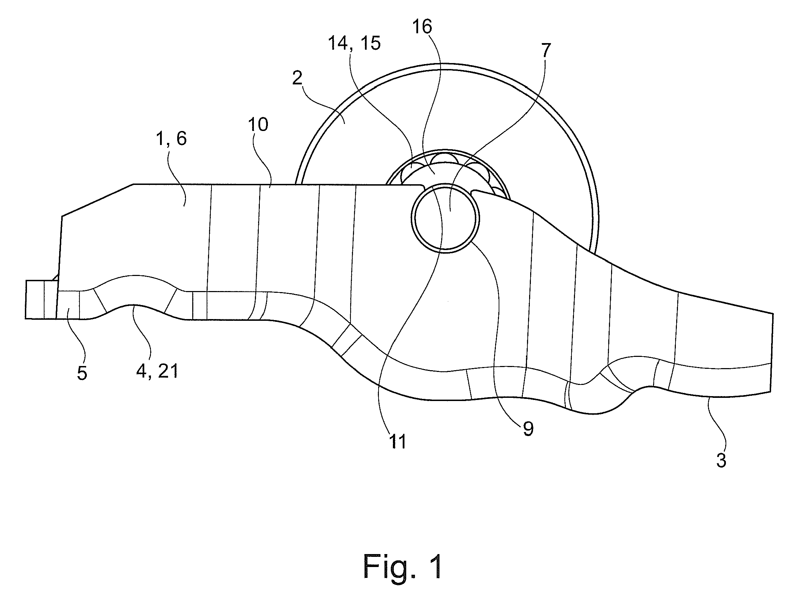

Aus Figur 1 geht ein schmalbauender, hebelartigen Nockenfolger 1 für einen Schiebenockenventiltrieb einer Brennkraftmaschine hervor. Der Nockenfolger 1 hat einen U-förmigen Querschnitt und besteht aus dünnwandigem Stahlblech.

Der Nockenfolger 1, welcher hier als Schlepphebel vorliegt, hat zwei durch einen Querbalken 5 verbundene, aufrechte Seitenwände 6. An einer Unterseite 21 des Querbalkens 5 ist einenends eine Anlage 3 für ein Gaswechselventil und anderenends eine kalottenförmige Lagerstelle 4 zur schwenkbeweglichen Abstützung auf einem Kopf eines Abstützelements angeordnet.

Etwa im Bereich einer Längsmitte des Nockenfolgers 1 verläuft zwischen seinen Seitenwänden 6 eine Nockenanlaufrolle 2 auf einem Bolzen 7, welcher in Bohrungen 9 der Seitenwände 6 sitzt. Wie zu erkennen ist, sind die Bohrungen 9 nicht vollständig geschlossen, sondern jede Bohrung 9 schneidet eine nockenzugewandte Längsseite 10 ihrer Seitenwand 6 abschnittsweise, so dass der Bolzen 7 an dieser Längsseite 10 mit einem Umfangssegment 11 frei liegt. Gemäß sämtlichen Figuren umfasst die jeweilige Bohrung 9 den Bolzen 7 um mehr als 180°.

Wie in Figur 1 gezeigt, sitzt die Nockenanlaufrolle 2 über eine Nadellagerung 14 auf dem Bolzen 7. Dabei sind Nadeln 15 der Nadellagerung 14 lateral im Bereich der jeweils nockenzugewandten Längsseite 10 der Seitenwand 6 abschnittsweise wandfrei, d. h. mit anderen Worten, sie ragen über die Längsseiten 10 der Seitenwände 6 hinaus. Zu deren Verliersicherung ist beidseits der Nockenanlaufrolle 2 eine innerhalb der Seitenwände 6 auf dem Bolzen 7 sitzende Anlaufscheibe 16 appliziert, welche die Nadeln 15 hierbei größtenteils radial überdeckt.

Der vollständig durchgehärtete Bolzen 7 nach Figur 1 ist stirnseitig verstemmt, also aufgeweitet und somit hervorragend axial fixiert. Ggf. kann er, trotz dessen Aufweitung, innerhalb der Bohrungen 9 drehbeweglich vorliegen. Zum Zwecke dessen Montage wird er seitlich durch die Bohrungen 9, bei vormontierter Nockenanlaufrolle 2, geführt.

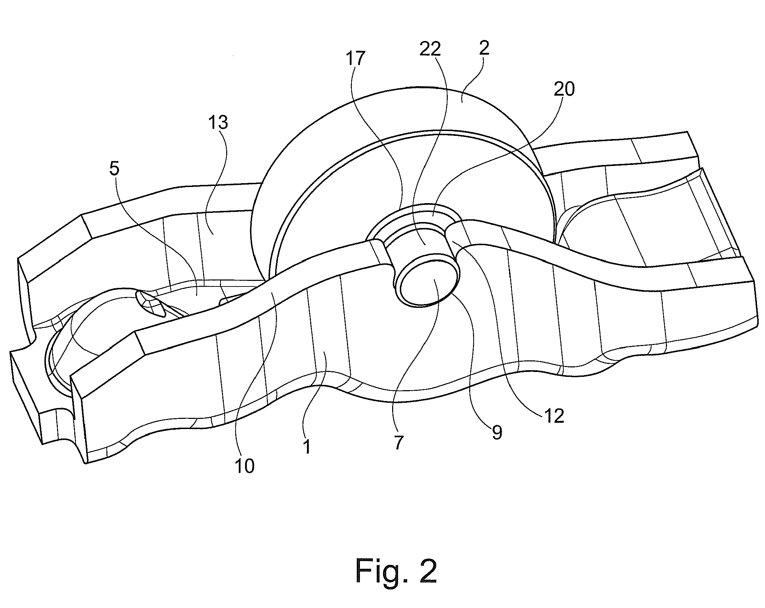

Wie aus Figur 2 hervorgeht, sind unmittelbar beidseitig des jeweils freien Umfangssegments 11 der Bohrung 9 liegende Bereiche der Längsseite 10 der Seitenwand 6 als biegeelastische Ansätze 12 ausgebildet. Eine Montage des Bolzens 7 gestaltet sich derart, dass dieser von oben hinter die Ansätze 12 geschnappt ist.

Aus Figur 2 ist weiter entnehmbar, dass die Nockenanlaufrolle 2 unmittelbar über ihre Bohrung 17 auf dem Bolzen 7 gleitgelagert verläuft. Letztgenannter Bolzen 7 weist beidendig eine Abstufung 22 seines Durchmessers auf, über welche er in den Bohrungen 9 gelagert ist. Unter "Abstufung 22" ist hierbei eine Durchmesserverringerung zu verstehen. Ringabsätze 20 der Abstufungen 22 laufen vor Innenseiten 13 der Seitenwände 6, so dass der Bolzen 7 gut axial fixiert ist. Anstelle des gestuften Bolzens 7 kann dieser auch ungestuft vorliegen, wobei zur Darstellung dessen Stufung dann ein separater Ring mittig aufgepresst ist.

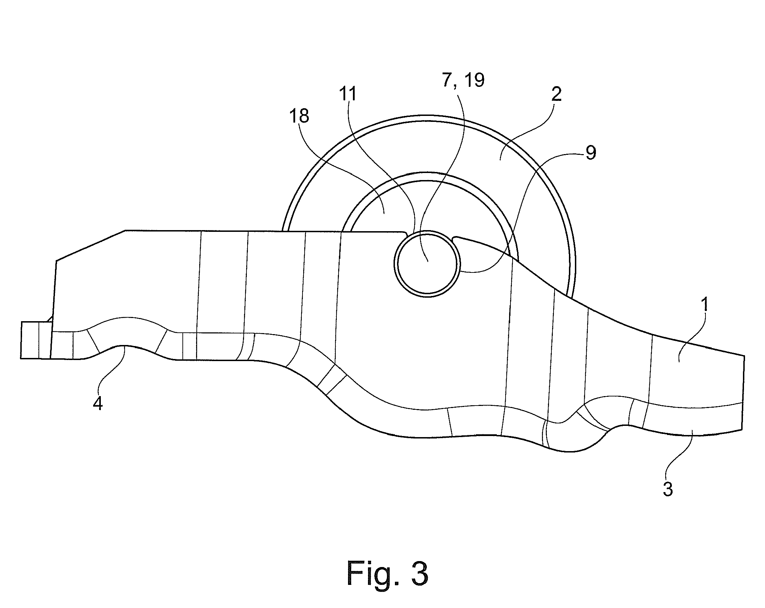

Gemäß Figur 3 ist die Nockenanlaufrolle 2 über einen Zwischenring 18 auf dem Bolzen 7 gelagert. Die Nadellagerung nach Figur 1 entfällt.

Aufgrund der in Nockenrichtung offenen Bohrungen 9 für den Bolzen 7 ist es möglich, die Höhe der Seitenwände 6 von der Nockenseite her zu reduzieren, so dass ein größerer Nockenfreigang wie eingangs dargelegt möglich ist.

### Liste der Bezugszahlen

1) Nockenfolger
2) Nockenanlaufrolle
3) Anlage
4) Lagerstelle
5) Querbalken
6) Seitenwand
7) Bolzen
8) nicht vergeben
9) Bohrung
10) Längsseite
11)Umfangssegment
12)Ansatz
13)Innenseite
14) Nadellagerung
15)Nadel
16)Anlaufscheibe
17)Bohrung
18)Zwischenring
19)Stirnseite
20) Ringabsatz
21)Unterseite
22)Abstufung

## Patentansprüche

1. Hebelartiger Nockenfolger (1), insbesondere für einen Schiebenockenventiltrieb einer Brennkraftmaschine, mit einer Nockenanlaufrolle (2), einer Anlage (3) für ein Gaswechselventil und einer Lagerstelle (4) zur Abstützung gegenüber einem Zylinderkopf der Brennkraftmaschine, welcher Nockenfolger (1) zwei durch einen Querbalken (5) verbundene Seitenwände (6) hat, zwischen denen die auf einem Bolzen (7) gelagerte Nockenanlaufrolle (2) aufgenommen ist, welcher Bolzen (7) in Bohrungen (9) der Seitenwände (6) verläuft, **dadurch gekennzeichnet, dass** jede Bohrung (9) eine nockenzugewandte Längsseite (10) ihrer Seitenwand (6) abschnittsweise schneidet, derartig, dass der Bolzen (7) an dieser Längsseite (10) mit einem Umfangssegment (11) frei liegt.

2. Nockenfolger nach Anspruch 1, **dadurch gekennzeichnet, dass** die jeweilige Bohrung (9) den Bolzen (7) um mehr als 180° umfasst.

3. Nockenfolger nach Anspruch 2, **dadurch gekennzeichnet, dass** unmittelbar beidseitig des jeweils freien Umfangssegments (11) der entsprechenden Bohrung (9) liegende Bereiche der Längsseite (10) der Seitenwand (6) als biegeelastische Ansätze (12) dargestellt sind, hinter welche der Bolzen (7) geschnappt ist.

4. Nockenfolger nach Anspruch 2, **dadurch gekennzeichnet, dass** der Bolzen (7) beidendig eine Abstufung (22) seines Durchmessers aufweist, über welche er in den Bohrungen (9) gelagert ist, wobei Ringabsätze (20) der Abstufungen (22) vor Innenseiten (13) der Seitenwände (6), den Bolzen (7) axial fixierend, laufen.

5. Nockenfolger nach Anspruch 4, **dadurch gekennzeichnet, dass** zur Darstellung der Abstufungen (22) der Bolzen (7) einen mittig aufgepressten Ring aufweist, dessen Stirnen die Ringabsätze (20) bilden.

6. Nockenfolger nach Anspruch 1, **dadurch gekennzeichnet, dass** die Nockenanlaufrolle (2) über eine Wälzlagerung wie eine Nadellagerung (14) auf dem Bolzen (7) sitzt, wobei Nadeln (15) der Nadellagerung (14) lateral im Bereich der jeweils nockenzugewandten Längsseite (10) der Seitenwand (6) abschnittsweise wandfrei sind, wobei zu deren Verliersicherung eine auf dem Bolzen (7) zwischen der Seitenwand (6) und der Nockenanlaufrolle (2) sitzende Anlaufscheibe (16) appliziert ist, welche die Nadeln (15) radial zumindest abschnittsweise überdeckt.

7. Nockenfolger nach Anspruch 1, **dadurch gekennzeichnet, dass** die Nockenanlaufrolle (2) über ihre Bohrung (17) unmittelbar auf dem Bolzen (7) gelagert ist.

8. Nockenfolger nach Anspruch 1, **dadurch gekennzeichnet, dass** die Nockenanlaufrolle (2) über einen Zwischenring (18) auf dem Bolzen (7) gelagert ist.

9. Nockenfolger nach Anspruch 1, **dadurch gekennzeichnet, dass** der Nockenfolger (1) einen U-, umgekehrt U- oder H-förmigen Querschnitt aufweist und entweder aus Stahlblech stanz-biegetechnisch oder fließpresstechnisch hergestellt ist.

10. Nockenfolger nach Anspruch 1, **dadurch gekennzeichnet, dass** der Bolzen (7) über seine gesamte Längserstreckung durchgehärtet ist und dessen Stirnseiten (19) mittels Radialpunktnieten aufgeweitet sind.

## Claims

1. Lever-type cam follower (1), in particular for a sliding cam valve drive of an internal combustion engine, having a cam run-on roller (2), a rest (3) for a gas exchange valve and a bearing point (4) for support with respect to a cylinder head of the internal combustion engine, which cam follower (1) has two side walls (6) which are connected by way of a transverse bar (5) and between which the cam run-on roller (2) which is mounted on a pin (7) is received, which pin (7) runs in bores (9) of the side walls (6), **characterized in that** each bore (9) intersects a cam-facing longitudinal side (10) of its side wall (6) in sections, in such a way that the pin (7) lies exposed with a circumferential segment (11) on the said longitudinal side (10).

2. Cam follower according to Claim 1, **characterized in that** the respective bore (9) surrounds the pin (7) over more than 180°.

3. Cam follower according to Claim 2, **characterized in that** regions of the longitudinal side (10) of the side wall (6) which lie directly on both sides of the respectively free circumferential segment (11) of the corresponding bore (9) are provided as resiliently flexible lugs (12), behind which the pin (7) is snapped.

4. Cam follower according to Claim 2, **characterized in that** the pin (7) has a stepped-down portion (22) of its diameter at both ends, via which stepped-down portion (22) it is mounted in the bores (9), annular shoulders (20) of the stepped-down portions (22) running in front of the inner sides (13) of the side walls (6) in a manner which fixes the pin (7) axially.

5. Cam follower according to Claim 4, **characterized in that**, in order to provide the stepped-down portions (22), the pin (7) has a ring which is pressed on centrally and the front sides of which form the annular shoulders (20).

6. Cam follower according to Claim 1, **characterized in that** the cam run-on roller (2) is seated on the pin (7) via a roller bearing such as a needle bearing (14), needles (15) of the needle bearing (14) being wall-free in sections laterally in the region of the respectively cam-facing longitudinal side (10) of the side wall (6), a thrust washer (16) which is seated on the pin (7) between the side wall (6) and the cam run-on roller (2) and covers the needles (15) radially at least in sections being applied in order to secure the said needles (15) captively.

7. Cam follower according to Claim 1, **characterized in that** the cam run-on roller (2) is mounted directly on the pin (7) via its bore (17).

8. Cam follower according to Claim 1, **characterized in that** the cam run-on roller (2) is mounted on the pin (7) via an intermediate ring (18).

9. Cam follower according to Claim 1, **characterized in that** the cam follower (1) has a U-shaped, reverse U-shaped or H-shaped cross section and is produced either from steel sheet using stamping and bending techniques or using extrusion techniques.

10. Cam follower according to Claim 1, **characterized in that** the pin (7) is through-hardened over its entire longitudinal extent and its end sides (19) are widened by means of radial point riveting.

## Revendications

1. Suiveur de came de type levier (1), en particulier pour une commande de soupapes à came coulissante d'un moteur à combustion interne, comprenant un galet de roulement de came (2), une butée (3) pour une soupape d'échange de gaz et un point de palier (4) pour le support par rapport à une culasse du moteur à combustion interne, lequel suiveur de came (1) présente deux parois latérales (6) connectées par une traverse (5), entre lesquelles est reçu le galet de roulement de came (2) supporté sur un boulon (7), lequel boulon (7) s'étend dans des alésages (9) des parois latérales (6), **caractérisé en ce que** chaque alésage (9) coupe en partie un côté longitudinal de sa paroi latérale (6), tourné vers la came (10), de telle sorte que le boulon (7) soit exposé au niveau de ce côté longitudinal (10) avec un segment périphérique (11).

2. Suiveur de came selon la revendication 1, **caractérisé en ce que** l'alésage respectif (9) entoure le boulon (7) sur plus de 180°.

3. Suiveur de came selon la revendication 2, **caractérisé en ce que** des régions du côté longitudinal (10) de la paroi latérale (6) situées directement des deux côtés du segment périphérique respectif libre (11) de l'alésage correspondant (9) sont réalisées sous forme d'inserts élastiques flexibles (12) derrière lesquels le boulon (7) est encliqueté.

4. Suiveur de came selon la revendication 2, **caractérisé en ce que** le boulon (7) présente au niveau des deux extrémités un étagement (22) de son diamètre, par le biais duquel il est supporté dans les alésages (9), des épaulements annulaires (20) des étagements (22) s'étendant devant des côtés intérieurs (13) des parois latérales (6), en fixant axialement le boulon (7).

5. Suiveur de came selon la revendication 4, **caractérisé en ce que** pour réaliser les étagements (22), le boulon (7) présente une bague pressée centralement, dont les faces frontales constituent les épaulements annulaires (20).

6. Suiveur de came selon la revendication 1, **caractérisé en ce que** le galet de roulement de came (2) repose sur le boulon (7) par le biais d'un support sur palier à rouleaux tel qu'un palier à aiguille (14), des aiguilles (15) du palier à aiguilles (14) étant en partie sans paroi latéralement dans la région du côté longitudinal (10) de la paroi latérale (6) respectivement tourné vers la came, et pour sa fixation imperdable, une rondelle de butée (16) reposant sur le boulon (7) entre la paroi latérale (6) et le galet de roulement de came (2) étant appliquée, laquelle recouvre les aiguilles (15) radialement au moins en partie.

7. Suiveur de came selon la revendication 1, **caractérisé en ce que** le galet de roulement de came (2) est supporté par le biais de son alésage (17) directement sur le boulon (7).

8. Suiveur de came selon la revendication 1, **caractérisé en ce que** le galet de roulement de came (2) est supporté par le biais d'une bague intermédiaire (18) sur le boulon (7).

9. Suiveur de came selon la revendication 1, **caractérisé en ce que** la suiveur de came (1) présente une section transversale en forme de U, en forme de U inversé ou en forme de H et est fabriqué soit à partir d'une tôle d'acier par une technique d'estampage-cintrage ou par une technique d'extrusion-filage.

10. Suiveur de came selon la revendication 1, **caractérisé en ce que** le boulon (7) est trempé sur toute son étendue longitudinale et ses côtés frontaux (19) sont élargis par rivetage radial ponctuel.
